# EUROPEAN PATENT APPLICATION

(11) **EP 1 895 530 A1**
(43) Date of publication of application: **05.03.2008**
(21) Application number: 07016650.9
(22) Date of filing: 24.08.2007
(51) Int. Cl.: G11B 7/135

(54) **Spherical-aberration compensating element, fabricating method thereof, and optical pickup device including the same**

(30) Priority: 25.08.2006 JP 2006228759
(71) Applicant: Funai Electric Co., Ltd., Daito-shi Osaka 574-0013 (JP)
(72) Inventor: Sasabe, Mitsuyoshi, Daito-shi Osaka 574-0013 (JP); Fujii, Hitoshi, Daito-shi Osaka 574-0013 (JP); Nagashima, Kenji, Daito-shi Osaka 574-0013 (JP)
(74) Representative: Beetz & Partner

(57) **Abstract**

An optical pickup device includes at least a laser light source an objective lens, a photo detector, and a spherical-aberration compensating element. The spherical-aberration compensating element is configured so that a holographic polymer-dispersed liquid crystal formed by dispersing liquid crystal molecules in a polymer resin in a predetermined pattern is interposed between a pair of transparent substrates facing each other through transparent electrodes. Additionally, at least two or more spherical-aberration compensating elements are provided on an optical axis closer to the laser light source than the objective lens.

## Description

### BACKGROUND OF THE INVENTION

### Field of the Invention

The present invention relates to a spherical-aberration compensating element formed of a holographic polymer-liquid crystal, a fabricating method thereof, and an optical pickup device including the same.

### Description of Related Art

Optical recording discs including a compact disc (hereinafter, it is referred to as a CD) and a digital versatile disc (hereinafter, it is referred to as a DVD) are widely available. Furthermore, in order to increase the amount of information recorded on the optical discs, researches for increasing the density of the optical discs have been carried out recently. For example, a high density optical discs such as a HD-DVD which is DVD of high grade and a Blu-Ray Disc (hereinafter, it is referred to as a BD) start to be available in the market.

Recording/reproducing for such optical discs is performed by using an optical pickup device which can record or read information by irradiating a light beam on an optical disc. Depending on types of these optical discs, the numerical aperture (NA) of an objective lens or a wavelength of a light source which are used in the optical pickup device varies. For example, for a CD, an NA of an objective lens is 0.50 and a wavelength of a light source is 780 nm, for a DVD, an NA of an objective lens is 0.65 and a wavelength of a light source is 650 nm, for a HD-DVD, an NA of an objective lens is 0.65 and a wavelength of a light source is 405 nm, and for a BD, an NA of an objective lens is 0.85 and a wavelength of a light source is 405 nm.

As just described, since a different NA of an objective lens or a different wavelength of a light source is used in accordance with the types of the optical discs, it can be considered that different optical pickup devices are used for different optical discs. It can be preferably considered that one optical pickup device having one objective lens focusing a light beam on a recording surface of an optical disc for corresponding to a plurality of optical discs so as to decrease the size of the optical pickup device and simplify the structure of the optical pickup device and the like.

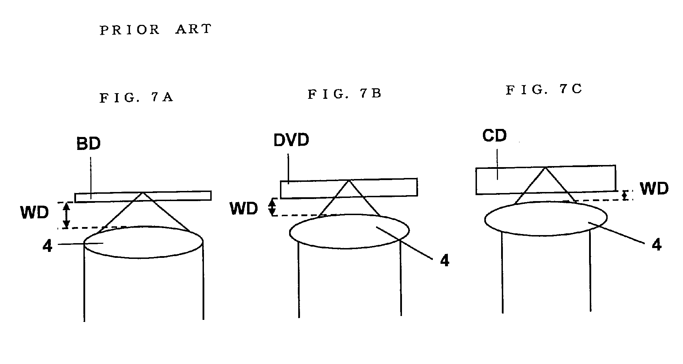

However, the optical discs having a different standard such as a CD, a DVD, or a BD include cover layers having different thicknesses. Therefore, there are problems that a spherical aberration is caused by a thickness error of a cover layer and a collision between the objective lens 4 and the optical disc is caused by a decrease of a working distance (hereinafter, it is referred to as a WD) between an objective lens 4 and the optical disc, particularly CD, as shown in Figs. 7A, 7B, and 7C, during reproducing the disk, when irradiating a laser, which has a different wavelength on an optical disc, by using the same device.

Generally, in order to solve these problems, a method in which a collimator lens disposed between the light source and the objective lens is moved so as to eliminate the spherical aberration caused by the thickness error of the cover layer, or a method in which a liquid crystal diffraction element for compensating the aberration of incident light by encapsulating a liquid crystal between a pair of transparent electrodes disposed between a pair of glass substrates, applying a voltage between the electrodes, and changing the refractive index of the liquid crystal is used has been used (see JP-A-H10-92000).

However, when an actuator is provided so as to drive the collimator lens, there have been problems that a size of the device having the actuator increases and the entire design of the device is complicated.

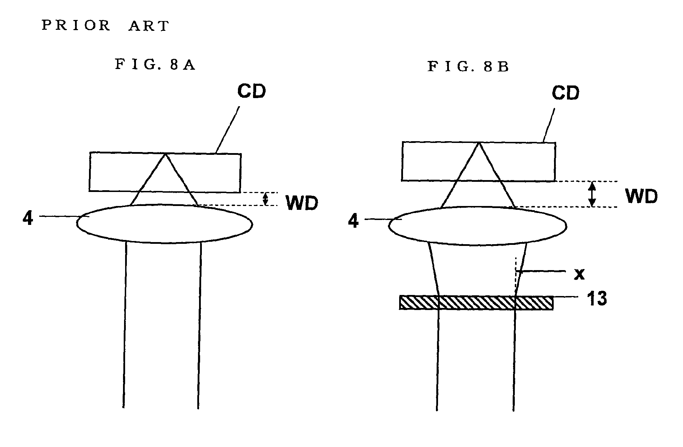

Figs. 8A and 8B show a feature of focusing a light beam on an objective lens, Fig. 8A shows the case where a liquid crystal diffraction element is not used, and Fig. 8B shows the case where a liquid crystal diffraction element is used. As shown in the drawings, when compensating a spherical aberration by disposing a liquid crystal diffraction element 13 in front of an objective lens 4 so that diverging light having a predetermined angle enters the objective lens 4, a WD can be extended in the case of reproducing a CD or the like, and thus it is possible to solve a problem that the aforementioned WD is shortened and to solve a problem of a spherical aberration for each optical disc. However, even though ±1^{st} order lights are generated from light diffracted by the liquid crystal diffraction element 13, practically, only one of the ±1^{st} order lights is used. Hence, there have been problems that light use efficiency is low and proper reproducing and recording operations can not be performed during reproducing and recording operations in which particularly high light intensity is required.

### SUMMARY OF THE INVENTION

In consideration of the situation mentioned above, it is an object of the present invention to provide a spherical-aberration compensating element capable of forming a fine spot by suppressing an occurrence of the spherical aberration, compensating the spherical aberration caused by the thickness error of the cover layer at the time of use, and securing the proper WD, when reproducing and recording the optical discs having different standards, and to provide an optical pickup device including the same.

In order to achieve the aforementioned object, the configuration according to the present invention is a spherical-aberration compensating element in which a holographic polymer-dispersed liquid crystal formed by dispersing liquid crystal molecules in a polymer resin in a predetermined pattern is interposed between a pair of transparent substrates facing each other.

In the spherical-aberration compensating element of the configuration according to the present invention, the polymer resin and the liquid crystal have substantially the same refractive index, and transparent electrodes may be disposed between the transparent substrates and the holographic polymer-dispersed liquid crystal.

A method of fabricating the spherical-aberration compensating element of the configuration according to the present invention, the method includes a step of disposing a compound liquid of the liquid crystal and the polymer resin between the transparent substrates and irradiating interference fringes of light on the compound liquid.

According to the invention, there is provided an optical pickup device including a light source emitting light beams having wavelengths different from each other; an objective lens focusing the light beams emitted from the light source on a recording surface of an optical recording medium; and a photo detector receiving the light beams reflected from the recording surface, in which the spherical-aberration compensating element is disposed on an optical axis closer to the light source than the objective lens.

In the optical pickup device of the configuration according to the present invention, at least two or more spherical-aberration compensating elements may be provided.

According to a first aspect of the present invention, the spherical-aberration compensating element is configured so that the holographic polymer-dispersed liquid crystal formed of the liquid crystal and the polymer resin is interposed between the transparent substrates. Accordingly, it is possible to compensate the spherical aberration and secure a proper WD since the spherical aberration is eliminated by making diverging light having a predetermined angle incident on the objective lens.

In addition, light beams simultaneously being transmitted through the spherical-aberration compensating element generate only a +1^{St} order light required to the spherical aberration. Accordingly, it is possible to secure high light use efficiency as compared with a known spherical-aberration compensating element using a known nematic liquid crystal which generates ± 1^{St} order light.

In addition, the spherical-aberration compensating element formed of the holographic polymer-dispersed liquid crystal has wavelength selectivity, and thus most of light beams other than particular wavelength light pass through the element. Hence, it is possible to reduce the effect for the light use efficiency even in use of a BD, a DVD, and a CD using different wavelengths.

In addition, according to a second aspect of the present invention, the transparent electrodes are interposed between the transparent substrates and the holographic polymer-dispersed liquid crystal, a voltage is applied to the electrodes. It is possible to further improve transmittance when light having wavelengths other than a particular wavelength passes through the spherical-aberration compensating element, and further improve the light use efficiency.

In addition, according to a third aspect of the present invention, the spherical-aberration compensating element is fabricated by a step of injecting a compound liquid of the liquid crystal molecules and the polymer resin into a gap of the transparent substrates and irradiating interference fringes of light on the compound liquid. Therefore, it is possible to easily fabricate the spherical-aberration compensating element.

In addition, in the optical pickup device having the light source, the objective lens, and the photo detector according to a fourth aspect of the present invention, the spherical-aberration compensating element is provided on an optical axis closer to the light source than the objective lens. Accordingly, it is possible to perform proper reproducing and recording operations in the process of reproducing and recording which require high light intensity, by using the spherical-aberration compensating element having excellent light use efficiency.

In addition, according to a fifth aspect of the present invention, various spherical aberrations caused in the use of a plurality of optical discs such as CD or DVD can be individually compensated by the spherical-aberration compensating element corresponding thereto in the manner of providing a plurality of spherical-aberration compensating elements. Therefore, it is possible to provide an optical pickup device compatible with a BD, a DVD, a CD. In addition, it is possible to reduce the effect for the light use efficiency even in use of a BD, a DVD, and a CD using different wavelengths since the spherical-aberration compensating element has wavelength selectivity.

### BRIEF DESCRIPTION OF THE DRAWINGS

Fig. 1 is a block diagram illustrating an optical pickup device according to the present invention.
Fig. 2A is a schematic perspective view illustrating a configuration of a spherical-aberration compensating element according to the present invention.
Fig. 2B is a sectional view taken along a line A-A in Fig. 2A.
Fig. 2C is a sectional view taken along a line B-B in Figs. 2A.
Fig. 3 is a graph illustrating a phase shift pattern for explaining a compensation of a spherical aberration by the spherical-aberration compensating element according to the present invention.
Fig. 4 is a diagram illustrating a fabricating method of the spherical-aberration compensating element according to the present invention.
Fig. 5 is a diagram illustrating a fabricating method of the spherical-aberration compensating element according to the present invention.
Fig. 6A is a diagram illustrating a feature in the case where light beams are focused on an optical recording medium which is a CD, in the optical pickup device according to the present invention.
Fig. 6B is a diagram illustrating a feature in the case where light beams are focused on an optical recording medium which is a DVD, in the optical pickup device according to the present invention.
Fig. 7A is a diagram illustrating a feature in the case where light beams are focused on an optical recording medium which is a BD, in a known optical pickup device.
Fig. 7B is a diagram illustrating a feature in the case where light beams are focused on an optical recording medium which is a DVD, in the known optical pickup device.
Fig. 7C is a diagram illustrating a feature in the case where light beams are focused on an optical recording medium which is a CD, in the known optical pickup device.
Fig. 8A is a schematic view illustrating a feature in the case where light beams are focused on an optical recording medium which is a CD by an objective lens, in a known configuration.
Fig. 8B is a schematic view illustrating a feature in the case where light beams incident on a known liquid crystal diffraction element are diffracted, emitted as diverging light, and focused on an optical recording medium which is a CD by an objective lens.

### DESCRIPTION OF THE PREFERRED EMBODIMENTS

Hereinafter, an embodiment of the present invention will be described with reference to drawings. The embodiments described hereinafter are merely an example, and so the present invention should not be interpreted to be limited to the embodiments described hereinafter. In the case where common elements exist as compared with Figs. 7 and 8 of known examples, those elements will be denoted by the same reference numerals and detailed description thereof will be omitted.

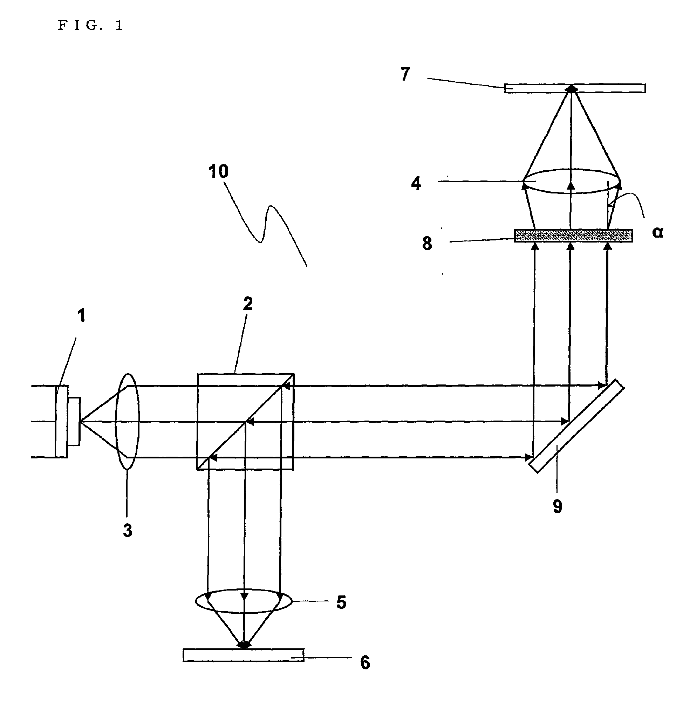

Fig. 1 shows a configuration of an optical pickup device 10 according to the embodiment of the present invention. The optical pickup device 10 includes a laser light source 1, a beam splitter 2, a collimator lens 3, an objective lens 4, a focusing lens 5, a photo detector 6, a spherical-aberration compensating element 8, and a reflective mirror 9.

In the process of reproduction, laser beams emitted from the laser light source 1 become parallel beams through the collimator lens 3, are transmitted through the beam splitter 2, are incident on the spherical-aberration compensating element 8 by changing a propagating direction thereof by the reflective mirror 9, exit from the spherical-aberration compensating element 8 toward the objective lens 4, and are focused on a signal surface of an optical disc 7 by the objective lens 4. The surface of the optical disc 7 is protected by a cover layer having a predetermined thickness.

Meanwhile, returning light of the laser beams reflected from the signal surface is transmitted through the objective lens 4, is transmitted through the spherical-aberration compensating element 8, is reflected by the beam splitter 2, and is incident on the photo detector 6 through the focusing lens 5. With such a configuration, a light output which can be obtained from the photo detector 6 is used as a tracking detection signal and a reproducing signal. The laser light source 1 illustrated in Fig. 1 employs a three-wavelength light source, but it may employ a plurality of light sources.

When reproducing optical discs having mutually different standards such as a CD, a DVD, or a BD by using the same objective lens 4, thicknesses of the cover layers are different from each other, and thus there is a problem that quality of the reproducing signal is deteriorated by a spherical aberration.

In order to solve deterioration of the reproducing signal, the spherical-aberration compensating element 8 is disposed on an optical axis between the objective lens 4 and the laser light source 1, laser lights incident on the spherical-aberration compensating element 8 exit at a predetermined divergence angle α and are incident on the objective lens 4 at a predetermined angle, thereby eliminating a spherical aberration, correcting the spherical aberration, and securing an enough WD. Light reflected by the optical disc 7 and incident at the angle of α on spherical-aberration compensating element 8 exits as parallel light and propagates toward the beam splitter 2. The refraction angle α is set in accordance with types of used optical discs.

Accordingly, it is possible to individually compensate the spherical aberration caused by reproducing and recording the optical discs in which light having wavelengths different from each other is used, by designing the optimum divergence angle α. In such a configuration, the divergence angle α of the spherical-aberration compensating element 8 is determined by a disperse pattern of liquid crystal molecules configuring the spherical-aberration compensating element 8, and has wavelength selectivity. Accordingly, when a plurality of optical discs having different standards are reproduced and recorded, it is necessary to provide a plurality of spherical-aberration compensating elements 8 having different divergence angles α of exiting light, and to perform the compensating of the spherical aberration by using the elements corresponding to the different standards.

The spherical-aberration compensating element 8 has not only the divergence angle selectivity but also the wavelength selectivity, and specifically, the spherical-aberration compensating element 8 including a holographic polymer-dispersed liquid crystal 15 of thickness of 10 µm can obtain high transmittance. As a result, there is no problem such as transmittance deterioration which is not necessary for even an optical pickup device using a plurality of wavelengths so as to be compatible with BD/DVD/CD.

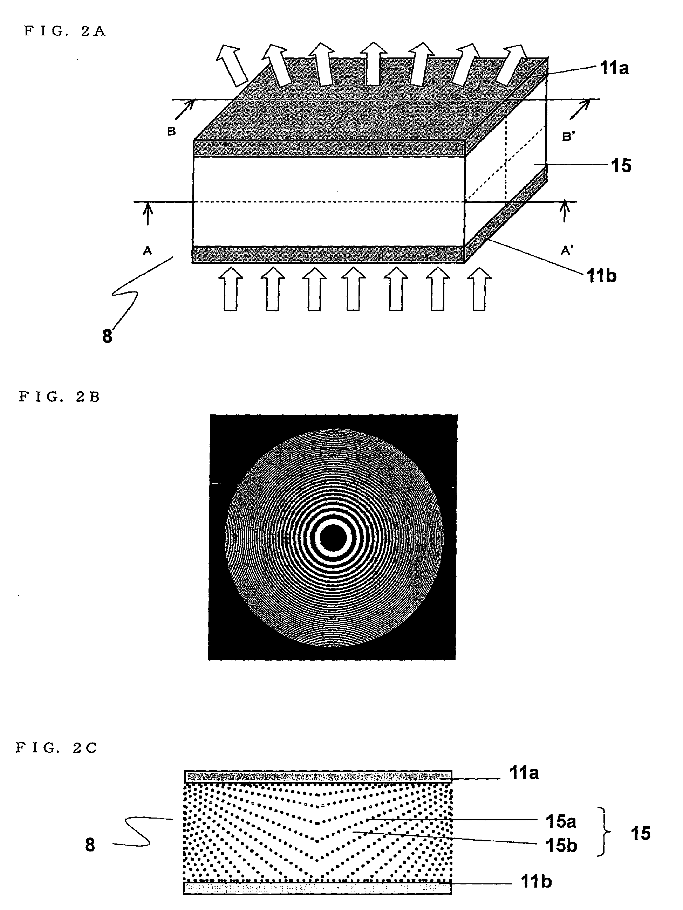

Next, the spherical-aberration compensating element 8 will be described in detail. Fig. 2A is a perspective view in which a part of the spherical-aberration compensating element 8 is cut off, Fig. 2B is a sectional view taken along a line A-A of the spherical-aberration compensating element 8 illustrated in Fig. 2A, and Fig. 2C is a sectional view taken along a line B-B. The spherical-aberration compensating element 8 includes the holographic polymer-dispersed liquid crystal 15 interposed between glass plates 11a and 11b which are a pair of transparent substrates facing each other. The holographic polymer-dispersed liquid crystal 15 is constituted of liquid crystal molecules 15a which are dispersed in a polymer resin 15b with a predetermined three-dimensional pattern (see Fig. 2C). When transparent electrodes are disposed, which are not shown in the drawings, between each of the glass plates 11a and 11b and the holographic polymer-dispersed liquid crystal 15, the holographic polymer-dispersed liquid crystal 15 is interposed between a pair of the transparent electrodes facing each other, and the transparent electrodes are supported by the transparent substrates 11a and 11b. ITO (indium tin oxide) is an example of the transparent electrodes.

In addition, the liquid crystal molecules 15a employ nematic liquid crystal molecules having a diameter of 100 nm or less, the polymer resin 15b employs a material having substantially the same refractive index as the liquid crystal constituted of the liquid crystal molecules 15a, and a thickness of the holographic polymer-dispersed liquid crystal 15 including the aforementioned components is in the range of several µm to several tens of µm.

The liquid crystal molecules 15a is constituted of smectic liquid crystal molecules or the like instead of the nematic liquid crystal molecules, thereby it is possible to obtain high orientation stability and to well maintain an orientation state after applying electric field.

The liquid crystal molecules 15a dispersed in a polymer resin 15b are arranged in the shape of concentric circles of which intervals decreases in an outer direction from their center such that the light entering a surface of the spherical-aberration compensating element 8 has larger divergence angle of the exiting light according to entering more outside of the concentric circle shown in Fig. 2B.

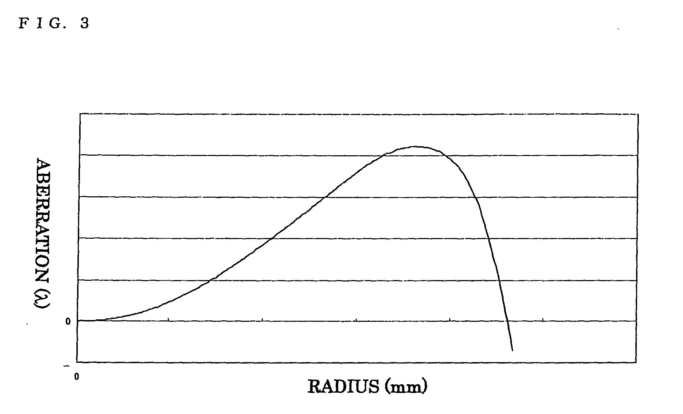

As known in Fig. 3 which shows a phase shift pattern, the reason for spherical aberration caused by thickness irregularity of the cover layer of the optical disc 7 is that the aberration value increases from the center of the objective lens 4 to the outside in the shape of a concentric circular distribution. An arrangement pattern of the liquid crystal molecules 15a which is an aberration- compensating pattern of eliminating the aberration having such shape, is designed as a three-dimensional pattern where every area is divided in accordance with a degree of the aberration to make it possible to eliminate the spherical aberration continuously and suppress further residual aberration In the present invention, the arrangement pattern of the liquid crystal molecules 15a in the polymer resin 15b illustrated in Fig. 2C is only an embodiment, and the arrangement pattern is not limited to the embodiment.

Next, a design method of the arrangement pattern of the liquid crystal molecules 15a dispersed in the polymer resin 15 will be described. The spherical-aberration compensating element 8 according to the present invention is fabricated by starting a photopolymerization of polymer in an anti-node portion having strong light intensity and forming the arranged pattern of the liquid crystal molecules 15a in a node portion having weak light intensity in interference fringes formed by interference between laser beams irradiated from different directions each other.

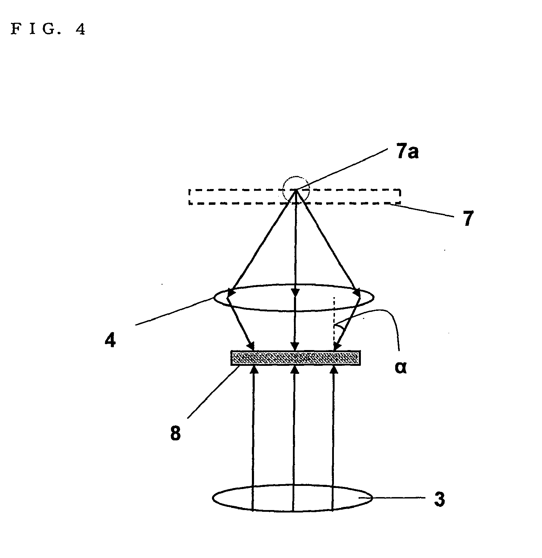

Fig. 4 is a diagram illustrating a fabricating method of the spherical-aberration compensating element 8 according to the present invention. The laser lights incident on the spherical-aberration compensating element 8 exit at predetermined divergence angle α, and the lights are incident on the objective lens 4. At there, it is necessary to perform the compensation operation of the spherical aberration and focus the lights on a focusing point 7a of the optical disc 7. Hence, a laser light emitting a particular wavelength light from the focusing point 7a, being transmitted through the objective lens 4, and being incident at an incident angle α, and a laser light equivalent to the particular wavelength light adjusted to parallel light by the collimator lens 3, the two beams interfere with each other and form the interference fringes. Then, a compound liquid formed by melting and mixing the liquid crystal molecules 15a and a photo-curable resin is injected in the gap of two glass plates 11 a and 11 b, and the glass plates are disposed on an area having the interference fringes formed thereon. As a result, it is possible to form the arrangement pattern of the liquid crystal molecules 15a based on the interference fringes which is irradiated on the compound liquid.

With such a configuration, when one light forming the interference fringes is incident on the spherical-aberration compensating element 8 fabricated by the method as described above, the other light equivalent to one light forming the interference fringes exits from the spherical-aberration compensating element 8. Consequently, the particular wavelength light adjusted as parallel light by the collimator lens 3 is incident on the spherical-aberration compensating element 8. Accordingly, light having the divergence angle α exits from the spherical-aberration compensating element 8, and the light is focused on the focusing point 7b by the objective lens 4.

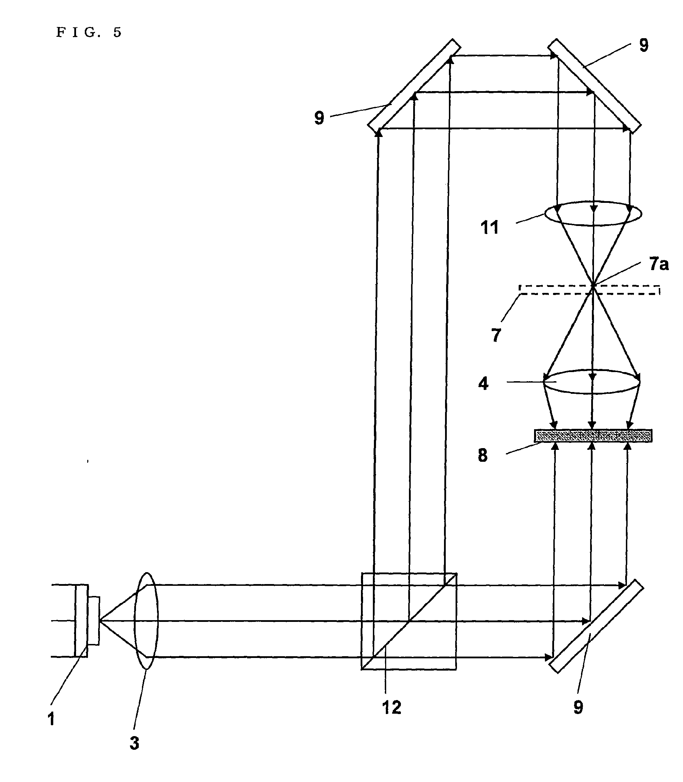

A spherical-aberration compensating element 8 for DVD application will be described in detail. When the spherical-aberration compensating element 8 is fabricated as shown in Fig. 5, red laser lights exiting from the laser light source 1 and adjusted as parallel light by the collimator lens 3 are divided into two lights by a half mirror 12, one red laser light is incident on a first lens 11 by using the reflective mirror 9 and is focused on the focusing point 7a on a DVD disk 7, and the light is transmitted through the objective lens 4 and is incident at a constant incident angle on a predetermined area on which the spherical-aberration compensating element 8 is disposed. With such a configuration, it is possible to form red laser lights, which are emitted from a spot equivalent to the focusing point 7a located on the DVD disk, in a predetermined area.

As described above, one incident light from the focusing point 7a and the other light from the laser light source 1 interfere with each other and form the interference fringes in a predetermined area in which the spherical-aberration compensating element 8 is disposed. In the area, a compound liquid formed by melting and mixing the liquid crystal molecules 15a and a photo-curable resin is injected in the gap between two glass plates 11 a and 11 b, and the interference fringes are irradiated thereon. As a result, the liquid crystal molecules 15a form a predetermined arrangement pattern, and the spherical-aberration compensating element 8 for DVD application is fabricated.

It is also possible to fabricate spherical-aberration compensating elements 8 for CD and BD application in the same manner as described above by using corresponding laser lights.

With such a configuration as described above, a three-dimensional arrangement pattern of the liquid crystal molecules 15a is formed by using the interference fringes formed by interference between the laser lights irradiated from different directions, and the residual aberration can be further suppressed.

Additionally, the spherical-aberration compensating element 8 fabricated as described above has the selectivity of the divergence angle α and the wavelength selectivity that substantially all lights having wavelengths other than a particular wavelength pass the element. Accordingly, when fabricating a BD/DVD/CD compatible optical pickup device, the spherical aberrations corresponding to each light having different wavelength is compensated by using the spherical-aberration compensating elements 8, in which the spherical-aberration compensating elements 8 corresponding to, for example, a DVD, a CD, and the like, respectively, are incorporated in the device.

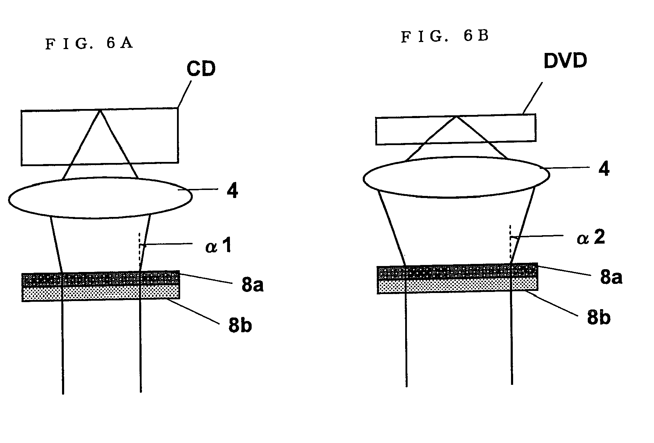

Figs. 6A and 6B illustrate propagation of light to be focused on optical discs in the case where spherical-aberration compensating elements 8a and 8b for CD and DVD applications are provided. When using a CD as the optical disc, infrared wavelength light is transmitted through the spherical-aberration compensating element 8b for DVD application, diverges at a predetermined divergence angle α1 from the spherical-aberration compensating element 8a for CD application, and thereby performing the spherical aberration compensation as shown in Fig. 6A. When using a DVD as the optical disc, red wavelength light diverges at a predetermined divergence angle α2 from the spherical-aberration compensating element 8b for DVD application, is transmitted through the spherical-aberration compensating element 8a for CD application, thereby performing the spherical aberration compensation as shown in Fig. 6B. When using a BD, if an objective lens is designed optimally for a BD application, blue wavelength light is transmitted through each the spherical-aberration compensating element 8, so there is no need to compensate the spherical aberration.

In addition, transparent electrodes which are not shown in the drawings are disposed between each of the glass plates 11a and 11b composing the spherical-aberration compensating elements 8 and the holographic polymer-dispersed liquid crystal 15, and a voltage is applied to the holographic polymer-dispersed liquid crystal 15. With such a configuration, it is possible to increase light use efficiency by suppressing light attenuation, at the time of transmission of light having wavelengths other than the particular wavelength.

The reason is because, in the state where a voltage is not applied to the transparent electrodes, the incident light is scattered by a refractive index difference between the liquid crystal molecules 15a and the polymer resin 15b (see Fig. 2C), and only the light having a particular wavelength which satisfies Bragg's condition diverges in a predetermined direction, but in the state where a voltage is applied to the transparent electrodes, the liquid crystal molecules 15a are oriented, and the refractive indexes of the liquid crystal molecules 15a and the polymer resin 15b substantially coincide with an optical axis, whereby a scattering of light does not occur substantially.

Additionally, the present invention is not limited to the embodiments mentioned above, and may be modified to various forms.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description. The technical scope of the present invention involves embodiments obtained by proper combination of each technical means disclosed in the different preferred embodiments.

## Claims

1. A spherical-aberration compensating element comprising:
a holographic polymer-dispersed liquid crystal formed by dispersing liquid crystal molecules in a polymer resin in a predetermined pattern is interposed between a pair of transparent substrates facing each other.

2. The spherical-aberration compensating element according to Claim 1, wherein the polymer resin and the liquid crystal have substantially the same refractive index, and transparent electrodes disposed between the transparent substrates and the holographic polymer-dispersed liquid crystal.

3. A method of fabricating the spherical-aberration compensating element according to Claim 1 or 2, the method comprising a step of disposing a compound liquid of the liquid crystal and the polymer resin between the transparent substrates and irradiating interference fringes of light on the compound liquid.

4. An optical pickup device having the spherical-aberration compensating element according to Claim 1 or 2, the device comprising:
a light source emitting light beams having wavelengths different from each other;
an objective lens focusing the light beams emitted from the light source on a recording surface of an optical recording medium; and
a photo detector receiving the light beams reflected from the recording surface, wherein the spherical-aberration compensating element is disposed on an optical axis closer to the light source than the objective lens.

5. The optical pickup device according to Claim 4, wherein at least two or more spherical-aberration compensating elements are provided.
